# EUROPEAN PATENT SPECIFICATION

(11) **EP 3 702 865 B1**
(45) Date of publication and mention of the grant of the patent: **07.09.2022**
(21) Application number: 19159913.3
(22) Date of filing: 28.02.2019
(51) Int. Cl.: G05D 1/00, B60W 50/00, B60K 26/00, B62D 15/02, B62D 51/00

(54) **METHOD, SYSTEM, AND COMPUTER PROGRAM PRODUCT FOR CONTROLLING A MOVEMENT OF A VEHICLE**
VERFAHREN, SYSTEM UND COMPUTERPROGRAMMPRODUKT ZUR STEUERUNG EINER BEWEGUNG EINES FAHRZEUGS
PROCÉDÉ, SYSTÈME ET PRODUIT DE PROGRAMME INFORMATIQUE PERMETTANT DE COMMANDER LE MOUVEMENT D'UN VÉHICULE

(43) Date of publication of application: 02.09.2020
(73) Proprietor: Bayerische Motoren Werke Aktiengesellschaft, 80809 München (DE)
(72) Inventor: Segler, Christoph, 80993 München (DE); Kaboli, Dr. Mohsen, 69115 Heidelberg (DE)

(56) References cited:
- GB-A- 2 536 709
- US-A1- 2017 189 249
- US-A1- 2017 192 428
- TRUJILLO-LEON A ET AL: "Evaluation of tactile sensors as an alternative to force sensors in an assistive haptic handlebar", 2017 IEEE BIOMEDICAL CIRCUITS AND SYSTEMS CONFERENCE (BIOCAS), IEEE, 19 October 2017 (2017-10-19), pages 1-4, XP033340851, DOI: 10.1109/BIOCAS.2017.8325118 [retrieved on 2018-03-23]

## Description

### Field of invention

The present invention relates to a method for controlling a movement of a vehicle. In particular, a multi-modal tactile sensor may be used to control the movement of the vehicle.

### Background Art

Current vehicles may use multiple sensors to detect objects in the environment of the vehicle. For example, current vehicles may use camera, LIDAR, radar, and further sensors to detect objects in the environment. Further, current vehicles may comprise a touch sensor or a proximity sensor in the exterior of the vehicle which may be used to unlock a door of the vehicle. However, current vehicle cannot detect a tactile interaction with the exterior the vehicle which allows controlling a movement of the vehicle.

US 2017/192428 A1 describes a method for controlling an autonomous vehicle using an external interface. The method includes an external interface that is in operable communication with one or more control systems of the autonomous vehicle. The method allows an entity in proximity of an outside of the autonomous vehicle to interact with the external interface, receives from the entity one or more control inputs, and controls one or more operations of the autonomous vehicle based on the one or more control inputs.

GB 2536709 A described an external control device for controlling dynamic operations of a vehicle from outside the vehicle. The external control device includes a user interface for receiving user inputs. The control device includes mounting means for releasably mounting it to the vehicle.

Accordingly, there may be a need for more simplified controlling a movement of a vehicle. In particular, there may be a need for more simplified controlling a movement of a vehicle from the exterior of the vehicle.

### Summary of the Invention

This need may be met by the subject matter according to the independent claims. Advantageous embodiments of the present invention are described by the dependent claims.

Accordingly, the movement of the vehicle is simplified using the at least one multi-modal tactile sensor. For example, the position of the vehicle may be efficiently adapted from outside of the vehicle by tactile interaction with the vehicle.

The first signal comprises a signal of the at least one temperature sensor of the at least one multi-model tactile sensor and comprises a signal of the at least one proximity sensor of the at least one multi-model tactile sensor. This may provide the advantage that a person and/or an object may be efficiently detected based on the temperature.

The first tactile interaction comprises a human interaction or an object-based interaction. This may provide the advantage that different tactile interactions may be detected more efficiently.

The second tactile interaction provides the advantage that more complex tactile interactions may be determined efficiently.

The movement pattern depends on a force distribution of the at least one pressure sensor, and the at least one a shear force sensor of the at least one multi-model tactile sensor. This may provide the advantage that the vehicle may be moved efficiently by one or more tactile interactions.

According to an embodiment of the invention, the vehicle may be a parked vehicle, and/or the vehicle may be a stationary vehicle. This may provide the advantage that a parking vehicle may be efficiently moved by the first and second touch interaction. Accordingly, the vehicle may be repositioned in a parking space by tactile interaction with the vehicle in order to make further parking space available.

According to a further embodiment of the invention, the vehicle body part of the exterior of the vehicle may comprise an array of multi-modal tactile sensors. This may provide the advantage that a larger space of the exterior of the vehicle may be used for tactile interaction with the vehicle.

According to a further embodiment of the invention, each multi-modal tactile sensor may comprise at least one pressure sensor, at least one a shear force sensor, at least one proximity sensor, at least one accelerometer sensor, and at least one temperature sensor. This may provide the advantage that each multi-modal tactile sensor is able to measure a plurality of different and/or complex tactile interactions. Accordingly, a multi-modal tactile sensor may be used more flexible.

According to a further embodiment of the invention, the second signal may comprise a signal of at least one pressure sensor, at least one a shear force sensor, at least one proximity sensor, and at least one accelerometer sensor of the at least one multi-model tactile sensor. This may provide the advantage that multiple tactile interactions may be efficiently measured by the at least one multi-modal tactile sensor.

According to a further embodiment of the invention, the second tactile interaction may comprise an object-vehicle-distance interaction if the first tactile interaction indicates an object-based interaction. This may provide the advantage that a collision of the object with the vehicle may be efficiently avoided.

According to independent claim 7, there is provided a system for controlling a movement of a vehicle.

According to an embodiment of the invention, the system may further comprise instructions stored within the memory, wherein the instructions, when executed on the processor, cause the system to carry out the method as described above.

According to independent claim 9, there is provided a computer program product for controlling the movement of a vehicle, the computer program product, when being executed by a processor, is adapted for controlling and/or for carrying out the method as described above.

As used herein, reference to a computer program or a computer program product is intended to be equivalent to a reference to a program element and/or to a computer readable medium containing instructions for controlling a computer system to coordinate the performance of the above described method.

The computer program may be implemented as computer readable instruction code in any suitable programming language and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

**Figure 1** shows an exemplary method for controlling a movement of a vehicle,
**Figure 2** shows an exemplary array of multi-modal tactile sensors,
**Figure 3** shows an exemplary scenario of a human-controlled movement of a vehicle,
**Figure 4** shows an exemplary scenario of an object-controlled movement of a vehicle, and
**Figure 5** shows an exemplary scenario of an object-controlled movement of a vehicle body part.

### Detailed Description

The illustration in the drawing is schematically. It is noted that in different figures, similar or identical elements are provided with the same reference signs or with reference signs, which are different from the corresponding reference signs only within the first digit.

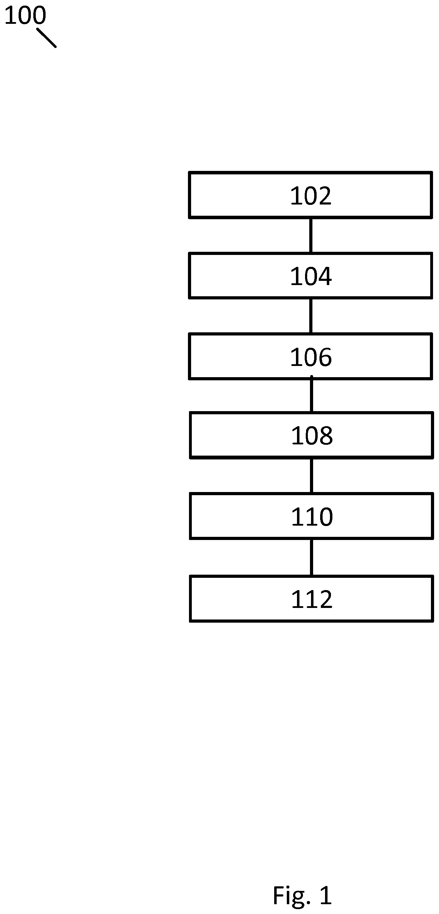

**Figure 1** shows an exemplary method 100 for controlling a movement of a vehicle. Additionally or alternatively, the method 100 may control a movement of a vehicle body part, e.g. a door of the vehicle. Further, the method may control a movement of the vehicle and a vehicle body part, e.g. the vehicle and the vehicle body part may be controlled in a manner that the vehicle and the vehicle body part may move independently from each other at the same time.

The vehicle may comprise at least one vehicle body part of an exterior of the vehicle. The at least one vehicle body part of the exterior of the vehicle may comprise at least one multi-modal tactile sensor. Preferably, multiple vehicle body parts of the exterior of the vehicle may comprise at least one multi-modal tactile sensor. Preferably, each vehicle body part comprises an array of multi-modal tactile sensors. The number of multi-modal tactile sensors may depend from the size of the vehicle body part and/or the size of an area of the vehicle body part which may receive tactile input.

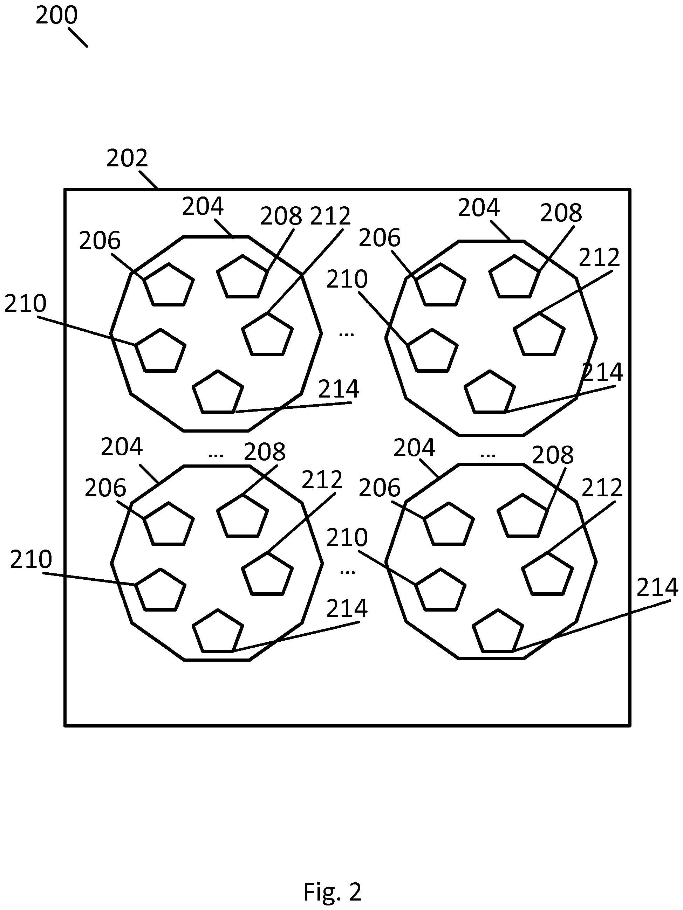

In particular, **Figure 2** shows exemplary array 200 of multi-modal tactile sensors 204 of a vehicle body part 202. As depicted in Figure 2, each multi-modal tactile sensor 204 may comprise at least one temperature sensor 206, at least one pressure sensor 208, at least one a shear force sensor 210, at least one proximity sensor 212, and at least one accelerometer sensor 214. A temperature sensor 206 of the multi-modal tactile sensor 204 may measure a temperature of an object and/or a person touching the vehicle body part 202. A pressure sensor 208 of the multi-modal tactile sensor 204 may measure a normal force. A shear force sensor 210 of the multi-modal tactile sensor 204 may measure a tangential force. A proximity sensor 212 of the multi-modal tactile sensor 204 may measure a pre-touch distance and/or a pre-contact distance between an object or a person and the vehicle body part 202. An accelerator sensor 214 of the multi-modal tactile sensor 204 may measure a micro vibration and/or a vibration-tactile contact of an object and/or a person.

The method 100 may receive 102 a first signal of the at least one multi-modal tactile sensor 204 of the vehicle body part 202. In particular, the method 100 may receive the first signal of a sensor included in the at least one multi-modal tactile sensor 204. Preferably, the method may receive the first signal from a temperature sensor of the at least one multi-modal tactile sensor 204. The method 100 may determine 104 a first tactile interaction with the vehicle body 202 part based on the first signal of the at least one multi-model tactile sensor 204. For example, the first tactile interaction may comprise a person touching the vehicle body part 202 or an object approaching and/or touching the vehicle body part 202.

The method 100 may further receive 106 a second signal of the at least one multi-modal tactile sensor 204 of the vehicle body part 202. The second signal may be a signal of a further sensor of the at least one multi-modal tactile sensor 204. The second signal may depend on the first tactile interaction. Next, the method 100 may determine 108 a second tactile interaction with the vehicle body part 202 based on the second signal of the at least one multi-modal tactile sensor 204. Based on the second tactile interaction, the method 100 may determine 110 a movement pattern of the vehicle and/or at least the vehicle body part 202. Finally, the method 100 may control 112 the movement of the vehicle and/or at least the movement of the vehicle body part 202 using the movement pattern.

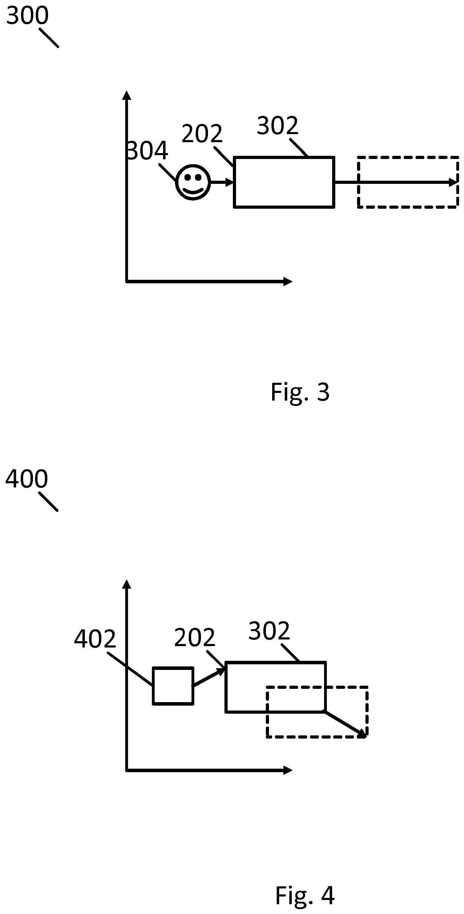

**Figure 3** shows an exemplary scenario 300 of a human-controlled movement of a vehicle 302. As illustrated in Figure 3, a person 304 touches a vehicle body part 202 of the vehicle 302. The method 100 may receive 102 a first signal of a temperature sensor 206 of the at least one multi-modal tactile sensor 204 of the vehicle body part 202. The method 100 may determine 104 a person 304 touching the vehicle body part 202 as the first tactile interaction based on the received first signal. For example, if the first signal indicates a temperature of a person 304, the method 100 may determine that a person 304 is touching the vehicle body part 202 as the first tactile interaction.

Further, the method 100 may receive a force distribution as the second signal. The force distribution may be generated using the pressure sensor 208 of the at least one multi-modal tactile sensor 204 and the shear force sensor 210 of the at least one multi-modal tactile sensor 204. The method 100 may determine 108 a person pushing the vehicle body part 306 as the second tactile interaction based on the received force distribution. Based on the force distribution, the method 100 may determine a movement pattern of the vehicle 302 and may control the movement of the vehicle 302 using the movement pattern. Accordingly, a person 304 may move the vehicle 302 using the at least one multi-modal tactile sensor 204.

**Figure 4** shows an exemplary scenario 400 of an object-controlled movement of the vehicle 302. As illustrated in Figure 4, an object 402 approaches and/or touches the vehicle body part 306 of the vehicle 302. The method 100 may receive 102 a first signal of a temperature sensor 206 of the at least one multi-modal tactile sensor 204 of the vehicle body part 306. Additionally or alternatively, the method 100 may receive 102 a first signal of the proximity sensor 212 of the at least one multi-modal tactile sensor 204. Additionally or alternatively, the method 100 may receive 102 a first signal of an accelerator sensor 214 of the at least one multi-modal tactile sensor 204. The method 100 may determine 104 the object 402 approaching and/or touching the vehicle body part 202 as the first tactile interaction based on the received first signal. For example, if the first signal indicates a temperature of an object, e.g. a temperature different from the temperature of a person, the method 100 may determine that the object 402 is approaching or touching the vehicle body part 202 as the first tactile interaction.

Further, the method 100 may receive a micro vibration as the second signal. Additionally or alternatively, the method 100 may receive 102 a distance of the object 402 as the second signal. The method 100 may determine 108 the object 402 approaching and/or touching the vehicle body part 306 as the second tactile interaction based on the received micro vibration and/or the received distance of the object. The method 100 may determine a movement pattern 308 of the vehicle 302 to avoid a collision of the object 402 and may control the movement of the vehicle 302 using the movement pattern. Accordingly, the object 402 may move the vehicle 302 to avoid a collision using the at least one multi-modal tactile sensor 204.

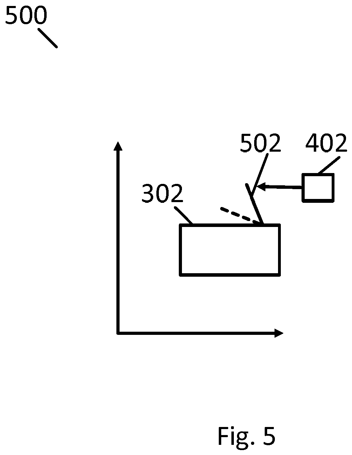

**Figure 5** shows an exemplary scenario 500 of an object-controlled movement of a vehicle body part 502, for example a door of the vehicle 302. As illustrated in Figure 5, an object 402 approaches and/or touches the vehicle body part 502 of the vehicle 302. The method 100 may receive 102 a first signal of a temperature sensor 206 of the at least one multi-modal tactile sensor 204 of the vehicle body part 502. Additionally or alternatively, the method 100 may receive 102 a first signal of the proximity sensor 212 of the at least one multi-modal tactile sensor 204. Additionally or alternatively, the method 100 may receive 102 a first signal of an accelerator sensor 214 of the at least one multi-modal tactile sensor 204. The method 100 may determine 104 the object 402 approaching and/or touching the vehicle body part 306 as the first tactile interaction based on the received first signal. For example, if the first signal indicates a temperature of an object, e.g. a temperature different from a temperature of a person, the method 100 may determine that an object is approaching and/or touching the vehicle body part 502 as the first tactile interaction.

Further, the method 100 may receive a micro vibration as the second signal. Additionally or alternatively, the method 100 may receive 102 a distance of the object 402 as the second signal. The method 100 may determine 108 the object 402 approaching and/or touching the vehicle body part 502 as the second tactile interaction based on the received micro vibration and/or the received distance of the object 402. The method 100 may determine a movement pattern 308 of the vehicle body part 502 to avoid a collision of the object with the vehicle body part 502 and may control the movement of the vehicle body part 502 of the vehicle 302 using the movement pattern. Accordingly, an object may move the vehicle body part 502 using the at least one multi-modal tactile sensor 204.

Advantageously, a person may efficiently move a vehicle, e.g. a car, into a parking space by pushing and/or touching the vehicle using at least one multi-modal tactile sensor. A person may also use the at least one multi-model tactile sensor to move vehicle in order to increase a parking space so that the vehicle may use the parking space. Additionally or alternatively, a person may efficiently move a vehicle out of a parking space. The multi-modal tactile sensor may efficiently enable additional functionality by adding further tactile interaction pattern which are associated to different vehicle functions. For example, the vehicle may be turned-off or turned-on by tapping on a particular vehicle body part of the exterior of the vehicle, and/or the vehicle may detect a collision or a hit of another parking vehicle.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

List of reference signs:
- 100: method
- 102: receive first signal
- 104: determine first tactile interaction
- 106: receive second signal
- 108: determine second tactile interaction
- 110: determine movement pattern
- 112: control movement
- 200: array of multi-modal tactile sensors
- 202: vehicle body part
- 204: multi-modal tactile sensor
- 206: temperature sensor
- 208: pressure sensor
- 210: shear force sensor
- 212: proximity sensor
- 214: accelerometer sensor
- 300: scenario
- 302: vehicle
- 304: person
- 400: scenario
- 402: object
- 500: scenario
- 502: vehicle body part

## Claims

1. Method (100) for controlling a movement of a vehicle, wherein the vehicle comprises a vehicle body part (202) of an exterior of the vehicle, and wherein the vehicle body part (202) of the exterior of the vehicle comprises at least one multi-modal tactile sensor (204), wherein the at least one multi-modal tactile sensor is integrated in the vehicle body part (202), wherein each multi-modal tactile sensor (204) comprises at least one pressure sensor (208), at least one shear force sensor (210), at least one proximity sensor (212), and at least one temperature sensor (206), the method comprising:
- receiving (102) a first signal of the at least one multi-modal tactile sensor (204) of the vehicle body part,
wherein the first signal comprises a signal of the at least one temperature sensor (206) of the at least one multi-model tactile sensor (204) and a signal of the at least one proximity sensor (212) of the at least one multi-model tactile sensor (204);
- determining (104) a first tactile interaction with the vehicle body part based on the first signal of the at least one multi-modal tactile sensor (204),
wherein the first tactile interaction comprises a human interaction or an object-based interaction, and
wherein the first tactile interaction comprises the human interaction if the at least one temperature sensor (206) of the at least one multi-model tactile sensor (204) temperature indicates a temperature of a person (304);
- receiving (106) a second signal of the at least one multi-modal tactile sensor (204) of the vehicle body part (202), the second signal depending on the first tactile interaction,
wherein the second signal comprises a force distribution, wherein the force distribution is generated using the pressure sensor 208 of the at least one multi-modal tactile sensor 204 and the shear force sensor 210 of the at least one multi-modal tactile sensor 204
- determining (108) a second tactile interaction with the vehicle body part based on the second signal of the at least one multi-modal tactile sensor (204),
wherein the second tactile interaction may comprise a person pushing the vehicle body part 306 based on the force distribution;
- determining (110) a movement pattern of the vehicle based on the second tactile interaction,
wherein the movement pattern depends on the force distribution of the at least one pressure sensor, and the at least one a shear force sensor of the at least one multi-model tactile sensor (204); and
- controlling (112) the movement of the vehicle using the movement pattern.

2. Method according to claim 1, wherein the vehicle is a parked vehicle; and/or wherein the vehicle is a stationary vehicle.

3. Method according to any one of claims 1 to 2, wherein the vehicle body part of the exterior of the vehicle comprises an array of multi-modal tactile sensors (200).

4. Method according to any one of claims 1 to 3, wherein each multi-modal tactile sensor (204) comprises at least one accelerometer sensor (214).

5. Method according to any one of claims 1 to 4, wherein the second signal comprises a signal of at least one pressure sensor (208), at least one a shear force sensor (210), at least one proximity sensor (212), and at least one accelerometer sensor (214) of the at least one multi-model tactile sensor (204).

6. Method according to any one of claims 1 to 5, wherein the second tactile interaction comprises an object-vehicle distance interaction if the first tactile interaction indicates an object-based interaction.

7. System for controlling a movement of a vehicle, wherein the vehicle comprises a vehicle body part of an exterior of the vehicle, and at least one multi-modal tactile sensor is integrated in the vehicle body part of the exterior of the vehicle, wherein the at least one multi-modal tactile sensor comprises at least one proximity sensor (212), at least one temperature sensor (206), at least one pressure sensor (208) and at least one shear force sensor (210), the system comprising:
a processor,
a memory, and
instructions stored within the memory, wherein the instructions, when executed on the processor, cause the system to
- receive (102) a first signal of the at least one multi-modal tactile sensor of the vehicle body part,
wherein the first signal comprises a signal of the at least one temperature sensor (206) of the at least one multi-model tactile sensor (204) and a signal of the at least one proximity sensor (212) of the at least one multi-model tactile sensor (204);
- determine (104) a first tactile interaction with the vehicle body part based on the first signal of the at least one multi-modal tactile sensor,
wherein the first tactile interaction comprises a human interaction or an object-based interaction, and
wherein the first tactile interaction comprises the human interaction if the at least one temperature sensor (206) of the at least one multi-model tactile sensor (204) temperature indicates a temperature of a person (304);
- receive (106) a second signal of the at least one multi-modal tactile sensor of the vehicle body part, the second signal depending on the first tactile interaction,
wherein the second signal comprises a force distribution, wherein the force distribution is generated using the pressure sensor 208 of the at least one multi-modal tactile sensor 204 and the shear force sensor 210 of the at least one multi-modal tactile sensor 204;
- determine (108) a second tactile interaction with the vehicle body part based on the second signal of the at least one multi-modal tactile sensor.
wherein the second tactile interaction may comprise a person pushing the vehicle body part 306 based on the force distribution;
- determine (110) a movement pattern of the vehicle based on the second tactile interaction,
wherein the movement pattern depends on the force distribution of the at least one pressure sensor, and the at least one a shear force sensor of the at least one multi-model tactile sensor (204); and
- control (112) the movement of the vehicle using the movement pattern.

8. System according to claim 7, the system further comprising instructions stored within the memory, wherein the instructions, when executed on the processor, cause the system to carry out the method according to any one of claims 2 to 6.

9. Computer program product for controlling the movement of a vehicle, the computer program product, when being executed by a processor, is adapted for controlling and/or for carrying out the method as set forth in any one of the claims 1 to 6.

## Patentansprüche

1. Verfahren (100) zum Steuern einer Bewegung eines Fahrzeugs, wobei das Fahrzeug einen Karosserieteil (202) eines Äußeren des Fahrzeugs umfasst und wobei der Karosserieteil (202) des Äußeren des Fahrzeugs mindestens einen multimodalen Tastsensor (204) umfasst, wobei der mindestens eine multimodale Tastsensor in den Karosserieteil (202) integriert ist, wobei
jeder multimodale Tastsensor (204) mindestens einen Drucksensor (208), mindestens einen Scherkraftsensor (210), mindestens einen Proximitätssensor ((212) und mindestens einen Temperatursensor (206) umfasst, wobei das Verfahren Folgendes umfasst:
- Empfangen (102) eines ersten Signals des mindestens einen multimodalen Tastsensors (204) des Karosserieteils,
wobei das erste Signal ein Signal des mindestens einen Temperatursensors (206) des mindestens einen multimodalen Tastsensors (204) und ein Signal des mindestens einen Proximitätssensors (212) des mindestens einen multimodalen Tastsensors (204) umfasst;
- Bestimmen (104) einer ersten Tastinteraktion mit dem Karosserieteil auf der Basis des ersten Signals des mindestens einen multimodalen Tastsensors (204),
wobei die erste Tastinteraktion eine menschliche Interaktion oder eine Interaktion auf Objektbasis umfasst und
wobei die erste Tastinteraktion die menschliche Interaktion umfasst, wenn Temperatur des mindestens einen Temperatursensors (206) des mindestens einen multimodalen Tastsensors (204) eine Temperatur einer Person angibt (304);
- Empfangen (106) eines zweiten Signals des mindestens einen multimodalen Tastsensors (204) des Karosserieteils (202), wobei das zweite Signal von der ersten Tastinteraktion abhängt,
wobei das zweite Signal eine Kraftverteilung umfasst, wobei die Kraftverteilung unter Verwendung des Drucksensors (208) des mindestens einen multimodalen Tastsensors (204) und des Scherkraftsensors (210) des mindestens einen multimodalen Tastsensors (204) erzeugt wird;
- Bestimmen (108) einer zweiten Tastinteraktion mit dem Karosserieteil auf der Basis des zweiten Signals des mindestens einen multimodalen Tastsensors (204),
wobei die zweite Tastinteraktion auf der Basis der Kraftverteilung umfassen kann, dass eine Person den Karosserieteil 306 drückt;
- Bestimmen (110) eines Bewegungsmusters des Fahrzeugs auf der Basis der zweiten Tastinteraktion, wobei das Bewegungsmuster von der Kraftverteilung des mindestens einen Drucksensors und des mindestens einen Scherkraftsensors des mindestens einen multimodalen Tastsensors (204) abhängt; und
- Steuern (112) der Bewegung des Fahrzeugs unter Verwendung des Bewegungsmusters.

2. Verfahren nach Anspruch 1, wobei das Fahrzeug ein geparktes Fahrzeug ist und/oder wobei das Fahrzeug ein stationäres Fahrzeug ist.

3. Verfahren nach einem der Ansprüche 1 bis 2, wobei der Karosserieteil des Äußeren des Fahrzeugs ein Array von multimodalen Tastsensoren (200) umfasst.

4. Verfahren nach einem der Ansprüche 1 bis 3, wobei jeder multimodale Tastsensor (204) mindestens einen Beschleunigungsmessersensor (214) umfasst.

5. Verfahren nach einem der Ansprüche 1 bis 4, wobei das zweite Signal ein Signal mindestens eines Drucksensors (208), mindestens eines Scherkraftsensors (210), mindestens eines Proximitätssensors (212) und mindestens eines Beschleunigungsmessersensors (214) des mindestens einen multimodalen Tastsensors (204) umfasst.

6. Verfahren nach einem der Ansprüche 1 bis 5, wobei die zweite Tastinteraktion eine Objekt-Fahrzeug-Distanzinteraktion umfasst, wenn die erste Tastinteraktion eine Interaktion auf Objektbasis angibt.

7. System zur Steuerung einer Bewegung eines Fahrzeugs, wobei das Fahrzeug einen Karosserieteil eines Äußeren des Fahrzeugs umfasst und mindestens ein multimodaler Tastsensor in dem Karosserieteil des Äußeren des Fahrzeugs integriert ist, wobei der mindestens eine multimodale Tastsensor mindestens einen Proximitätssensor (212), mindestens einen Temperatursensor (206), mindestens einen Drucksensor (208) und mindestens einen Scherkraftsensor (210) umfasst, wobei das System Folgendes umfasst:
einen Prozessor,
einen Speicher und
in dem Speicher gespeicherte Anweisungen, wobei die Anweisungen, wenn sie auf dem Prozessor ausgeführt werden, das System veranlassen zum
- Empfangen (102) eines ersten Signals des mindestens einen multimodalen Tastsensors des Karosserieteils, wobei das erste Signal ein Signal des mindestens einen Temperatursensors (206) des mindestens einen multimodalen Tastsensors (204) und ein Signal des mindestens einen Proximitätssensors (212) des mindestens einen multimodalen Tastsensors (204) umfasst;
- Bestimmen (104) einer ersten Tastinteraktion mit dem Karosserieteil auf der Basis des ersten Signals des mindestens einen multimodalen Tastsensors,
wobei die erste Tastinteraktion eine menschliche Interaktion oder eine Interaktion auf Objektbasis umfasst und
wobei die erste Tastinteraktion die menschliche Interaktion umfasst, wenn Temperatur des mindestens einen Temperatursensors (206) des mindestens einen multimodalen Tastsensors (204) eine Temperatur einer Person angibt (304);
- Empfangen (106) eines zweiten Signals des mindestens einen multimodalen Tastsensors des Karosserieteils, wobei das zweite Signal von der ersten Tastinteraktion abhängt,
wobei das zweite Signal eine Kraftverteilung umfasst, wobei die Kraftverteilung unter Verwendung des Drucksensors (208) des mindestens einen multimodalen Tastsensors (204) und des Scherkraftsensors (210) des mindestens einen multimodalen Tastsensors (204) erzeugt wird;
- Bestimmen (108) einer zweiten Tastinteraktion mit dem Karosserieteil auf der Basis des zweiten Signals des mindestens einen multimodalen Tastsensors,
wobei die zweite Tastinteraktion auf der Basis der Kraftverteilung umfassen kann, dass eine Person den Karosserieteil (306) drückt;
- Bestimmen (110) eines Bewegungsmusters des Fahrzeugs auf der Basis der zweiten Tastinteraktion, wobei das Bewegungsmuster von der Kraftverteilung des mindestens einen Drucksensors und des mindestens einen Scherkraftsensors des mindestens einen multimodalen Tastsensors (204) abhängt; und
- Steuern (112) der Bewegung des Fahrzeugs unter Verwendung des Bewegungsmusters.

8. System nach Anspruch 7, wobei das System ferner in dem Speicher gespeicherte Anweisungen umfasst, wobei die Anweisungen, wenn sie auf dem Prozessor ausgeführt werden, das System dazu veranlassen, das Verfahren nach einem der Ansprüche 2 bis 6 auszuführen.

9. Computerprogrammprodukt zum Steuern der Bewegung eines Fahrzeugs, wobei das Computerprogrammprodukt, wenn es durch einen Prozessor ausgeführt wird, ausgelegt ist zum Steuern und/oder Ausführen des Verfahrens nach einem der Ansprüche 1 bis 6.

## Revendications

1. Procédé (100) pour commander un mouvement d'un véhicule, dans lequel le véhicule comprend une partie de carrosserie de véhicule (202) d'un extérieur du véhicule, et dans lequel la partie de carrosserie de véhicule (202) de l'extérieur du véhicule comprend au moins un capteur tactile multimodal (204), dans lequel l'au moins un capteur tactile multimodal est intégré dans la partie de carrosserie de véhicule (202), dans lequel chaque capteur tactile multimodal (204) comprend au moins un capteur de pression (208), au moins un capteur de force de cisaillement (210), au moins un capteur de proximité (212), et au moins un capteur de température (206), le procédé comprenant :
- la réception (102) d'un premier signal de l'au moins un capteur tactile multimodal (204) de la partie de carrosserie de véhicule,
dans lequel le premier signal comprend un signal de l'au moins un capteur de température (206) de l'au moins un capteur tactile multimodal (204) et un signal de l'au moins un capteur de proximité (212) de l'au moins un capteur tactile multimodal (204) ;
- la détermination (104) d'une première interaction tactile avec la partie de carrosserie de véhicule basée sur le premier signal de l'au moins un capteur tactile multimodal (204),
dans lequel la première interaction tactile comprend une interaction humaine ou une interaction basée sur un objet, et
dans lequel la première interaction tactile comprend l'interaction humaine si la température de l'au moins un capteur de température (206) de l'au moins un capteur tactile multimodal (204) indique une température d'une personne (304) ;
- la réception (106) d'un second signal de l'au moins un capteur tactile multimodal (204) de la partie de carrosserie de véhicule (202), le second signal dépendant de la première interaction tactile,
dans lequel le second signal comprend une distribution de force, dans lequel la distribution de force est générée à l'aide du capteur de pression (208) de l'au moins un capteur tactile multimodal (204) et du capteur de force de cisaillement (210) de l'au moins un capteur tactile multimodal (204),
- la détermination (108) d'une seconde interaction tactile avec la partie de carrosserie de véhicule basée sur le second signal de l'au moins un capteur tactile multimodal (204),
dans lequel la seconde interaction tactile peut comprendre une personne poussant la partie de carrosserie de véhicule 306 sur la base de la distribution de force ;
- la détermination (110) d'un schéma de mouvement du véhicule basé sur la seconde interaction tactile,
dans lequel le schéma de mouvement dépend de la distribution de force de l'au moins un capteur de pression, et de l'au moins un capteur de force de cisaillement de l'au moins un capteur tactile multimodal (204) ; et
- la commande (112) du mouvement du véhicule à l'aide du schéma de mouvement.

2. Procédé selon la revendication 1, dans lequel le véhicule est un véhicule garé ; et/ou dans lequel le véhicule est un véhicule immobile.

3. Procédé selon l'une quelconque des revendications 1 et 2, dans lequel la partie de carrosserie de véhicule de l'extérieur du véhicule comprend un réseau de capteurs tactiles multimodaux (200).

4. Procédé selon l'une quelconque des revendications 1 à 3, dans lequel chaque capteur tactile multimodal (204) comprend au moins un capteur accéléromètre (214).

5. Procédé selon l'une quelconque des revendications 1 à 4, dans lequel le second signal comprend un signal d'au moins un capteur de pression (208), d'au moins un capteur de force de cisaillement (210), d'au moins un capteur de proximité (212), et d'au moins un capteur accéléromètre (214) de l'au moins un capteur tactile multimodal (204).

6. Procédé selon l'une quelconque des revendications 1 à 5, dans lequel la seconde interaction tactile comprend une interaction de distance objet-véhicule si la première interaction tactile indique une interaction basée sur un obj et.

7. Système pour commander un mouvement d'un véhicule, dans lequel le véhicule comprend une partie de carrosserie de véhicule d'un extérieur du véhicule, et au moins un capteur tactile multimodal est intégré dans la partie de carrosserie de véhicule de l'extérieur du véhicule, dans lequel l'au moins un capteur tactile multimodal comprend au moins un capteur de proximité (212), au moins un capteur de température (206), au moins un capteur de pression (208) et au moins un capteur de force de cisaillement (210), le système comprenant :
un processeur,
une mémoire, et
des instructions stockées dans la mémoire, dans lequel les instructions, lorsqu'elles sont exécutées sur le processeur, amènent le système à
- recevoir (102) un premier signal de l'au moins un capteur tactile multimodal de la partie de carrosserie de véhicule,
dans lequel le premier signal comprend un signal de l'au moins un capteur de température (206) de l'au moins un capteur tactile multimodal (204) et un signal de l'au moins un capteur de proximité (212) de l'au moins un capteur tactile multimodal (204) ;
- déterminer (104) une première interaction tactile avec la partie de carrosserie de véhicule basée sur le premier signal de l'au moins un capteur tactile multimodal,
dans lequel la première interaction tactile comprend une interaction humaine ou une interaction basée sur un objet, et
dans lequel la première interaction tactile comprend l'interaction humaine si la température de l'au moins un capteur de température (206) de l'au moins un capteur tactile multimodal (204) indique une température d'une personne (304) ;
- recevoir (106) un second signal de l'au moins un capteur tactile multimodal de la partie de carrosserie de véhicule, le second signal dépendant de la première interaction tactile,
dans lequel le second signal comprend une distribution de force, dans lequel la distribution de force est générée à l'aide du capteur de pression (208) de l'au moins un capteur tactile multimodal (204) et du capteur de force de cisaillement (210) de l'au moins un capteur tactile multimodal (204),
- déterminer (108) une seconde interaction tactile avec la partie de carrosserie de véhicule basée sur le second signal de l'au moins un capteur tactile multimodal,
dans lequel la seconde interaction tactile peut comprendre une personne poussant la partie de carrosserie de véhicule (306) sur la base de la distribution de force ;
- déterminer (110) un schéma de mouvement du véhicule basé sur la seconde interaction tactile,
dans lequel le schéma de mouvement dépend de la distribution de force de l'au moins un capteur de pression, et de l'au moins un capteur de force de cisaillement de l'au moins un capteur tactile multimodal (204) ; et
- commander (112) le mouvement du véhicule à l'aide du schéma de mouvement.

8. Système selon la revendication 7, le système comprenant en outre des instructions stockées dans la mémoire, dans lequel les instructions, lorsqu'elles sont exécutées sur le processeur, amènent le système à mettre en œuvre le procédé selon l'une quelconque des revendications 2 à 6.

9. Produit de programme informatique pour commander le mouvement d'un véhicule, le produit de programme informatique, lorsqu'il est exécuté par un processeur, étant adapté pour commander et/ou pour mettre en œuvre le procédé selon l'une quelconque des revendications 1 à 6.
